# EUROPÄISCHE PATENTANMELDUNG

(11) **EP 1 376 065 A2**
(43) Veröffentlichungstag der Anmeldung: **02.01.2004**
(21) Anmeldenummer: 03013890.3
(22) Anmeldetag: 20.06.2003
(51) Int. Cl.: G01D 5/26

(54) **Optoelektronisches Winkelmessgerät sowie Verfahren zu dessen Herstellung**

(30) Priorität: 28.06.2002 DE 10229246
(71) Anmelder: Stegmann GmbH & Co. KG, 78166 Donaueschingen (DE)
(72) Erfinder: Mutschler, Reinhold, 78056 Villingen-Schwenningen (DE)
(74) Vertreter: Ludewigt, Christoph

(57) **Zusammenfassung**

Die Erfindung betrifft ein optoelektronisches Winkelmessgerät, welches den Drehwinkel einer eingehenden Welle optoelektronisch vermittels einer mit der Welle verbundenen Maßverkörperung ermittelt, indem das durch eine Kollimatorlinse parallel kollimierte Licht einer Lichtquelle durch die Maßverkörperung moduliert und von einem Abtast-Empfänger detektiert wird, wobei der Lichtsender, die Kollimatorlinse, die Maßverkörperung und der Abtast-Empfänger zentrisch angeordnet sind, so dass die Drehachse im wesentlichen mit der optischen Achse übereinstimmt, bei dem sowohl zumindest das Endteil der Welle als mechanische Komponente als auch die refraktive Kollimatorlinse als optische Komponente des Winkelmessgerätes aus einem einheitlichen Kunststoff-Bauteil gebildet sind und dieses Kunststoff-Bauteil den Lichtsender und weitere elektronische Bauteile aufnimmt.

## Beschreibung

Winkelmesseinrichtungen werden an Dreh- und Spindelachsen, an Elektro- und insbesondere an Servomotoren zur Steuerung und Regelung sowie zur Positionierung insbesondere in der Werkzeugmaschinenindustrie und in Fertigungsund Handhabungseinrichtungen industriell eingesetzt.

Gemäß dem Stand der Technik wird zur Winkelmessung eine optische Maßverkörperung, auch Maßstab genannt, bevorzugt mit parallel kollimiertem Licht beleuchtet. Der Maßstab besteht dabei aus lithographisch hergestellten Chromstrukturen auf einem Glas- oder Kunststoff-Träger. Eine Winkelbewegung des Maßstabes relativ zum Abtast-Empfänger moduliert das auf den Abtast-Empfänger treffende Licht. Die Winkel-Informationen liegen in binär codierter Form auf dem Maßstab vor und werden vom Abtast-Empfänger detektiert und in elektrische Signale umgewandelt.

Es gibt im Wesentlichen zwei Arten der Winkelcodierung: inkrementale und absolute Codierungen (Codes). Inkrementale Codes sind periodische Strichcodes, die aufgezählt werden, und somit eine Winkel-Änderung dokumentieren. Sie geben jedoch nicht die absolute Winkelposition an. Daher weisen die Maßstäbe oftmals auf einer separaten Codespur eine Referenzmarkierung auf, die beim Überfahren eine Winkel-Referenzposition, die sogenannte Nullposition ermitteln und daher quasi-absolut genannt werden. Will man, ausgehend von diesem Winkelwert, den absoluten Winkelwert ermitteln, so wird von der Nullposition aus inkremental weitergezählt.

Im Gegensatz dazu weisen sogenannte absolute Winkelmessgeräte stets eine eindeutige Position auf, indem der Maßstab eine binär codierte Positionsinformation trägt. Gängige Codes sind neben dem sogenannten Binär-Code, der dem Bildungsgesetz der binären Zahlen entsprechend codiert ist, weiterhin etwa der Graycode oder ein Random-Code. Auch gemäß dem Nonius- bzw. Vernier-Verfahren gebildete Codierungen werden in industriellen Messsystemen eingesetzt. Hierzu werden auf mindestens zwei Codespuren Strichteilungen mit geringfügig unterschiedlichen Periodenlängen angeordnet, welche gemeinsam abgetastet eine absolute Positions-Codierung liefern.

Eine Maßverkörperung nach dem Moiré-Prinzip besteht aus Hell- / Dunkelflächen, die aus einer auf einem in der Regel aus Glas oder Kunststoff bestehendem Trägersubstrat aufgebrachten photolithographisch strukturierten Chromschicht bestehen, welche als Amplitudengitter die Amplitude des Lichtes moduliert.

Zur Abtastung des Maßstabes wird vor den elektro-optischen Abtastempfängern, die aus lichtempfindlichen halbleitenden Schichten bestehen und die optional in einem Chip integriert sein können, eine Blende angeordnet oder es werden optional hierzu entsprechend der Maßverkörperung strukturierte Halbleiterflächen verwendet.

Die Maßverkörperung 10 wird durch eine Beleuchtungseinheit, bestehend aus einer Lichtquelle 20, in der Regel einer im infraroten Spektrum emittierenden LED, sowie einer Kollimatoroptik 30 zur parallelen Bündelung des emittierten Lichtes beleuchtet. Die Kollimatoroptik 30 besteht meist aus einer Glaslinse, die jedoch auch aus Kunststoff hergestellt werden könnte. Die Beleuchtungseinheit ist in der Regel fest mit dem Stator verbunden.

Im Gegensatz zu Glaslinsen sind Linsen aus Kunststoff-Materialien als in Serie gefertigtes Bauteil preiswerter, da eine sphärische oder asphärische Oberflächen-Formgebung von Kunststoffen im Gegensatz zu Glas einfacher zu fertigen ist. Darüber hinaus sind Kunststoffe leichter zu handhaben und eine anschließende Schleifung und Politur der Linsenoberfläche kann entfallen. Für Kollimator-Optiken geringer Lichtleistung ist die optische Qualität von spritzgegossenen Kunststoff-Linsen oftmals ausreichend.

Die Herstellung von Kunststoff-Linsen sowie die Fertigung von Geräten, welche Kunststoff-Linsen beinhalten, weisen jedoch einige Probleme auf. Die Kunststoff-Linsen werden in der Regel spritzguss-technisch hergestellt. Die Kunststoff-Linse muss einen Ansatz aufweisen, um gefasst und eingebaut werden zu können. Weiterhin treten mechanische Spannungen innerhalb des Kunststoff-Materials bei der Linsen-Fertigung auf, da der Anspritzpunkt direkt in die Linsenfläche mündet, welche später unter Temperaturzyklen, mechanischen Belastungen oder in einer Lösungsmittel-Atmosphäre in Spannungsriss-Korrosionen resultieren. Daher sind insbesondere eine Verpressung und auch eine Verklebung der Kunststoff-Linsen beim Einbau in ein Drehwinkel-Messsystem nicht unproblematisch.

Im Falle der in den Patentschriften DE 197 50 474 C2 und US 6,359,409 B1 beschriebenen Drehwinkelmessgeräte ist der Abtastempfänger konzentrisch über der Welle angeordnet und die Beleuchtungseinheit ist in die Welle des Winkelmessgeräts mittig eingebaut und dreht sich mit dieser mit. Die Energie muss in diesem Fall durch eine entsprechende Einrichtung zugeführt werden. Dies kann insbesondere induktiv, kapazitiv oder durch Schleifkontakte geschehen. Teile dieser Einrichtung zur Energieübertragung (z. B. Schleifringe, Kondensatorplatten oder Spule mit Spulenkörper) sind elektrisch mit der Beleuchtungseinheit verbunden und drehen sich ebenfalls zusammen mit der Welle des Drehwinkelmessgeräts. Im Fall einer kapazitiven oder induktiven Energieeinkopplung sind außer der LED zusätzliche Elektronikbauteile, wie etwa Gleichrichterdioden, Kondensatoren etc. in die Beleuchtungseinheit integriert. Vorzugsweise sind die elektronischen Bauteile, wie auch der Lichtsender auf einer Platine platziert. Dabei ist der Lichtsender vorzugsweise als Chip-on-Board (COB) auf der Platine angeordnet. Hierfür wird der ungehäuste Chip mit der Platine direkt verbondet und anschließend mit einem transparenten Substrat vergossen.

Die Aufgabe der Erfindung besteht darin, möglichst viele der für die Messung des Drehwinkels erforderlichen Komponenten in ein opto-mechatronisches Bauteil zu integrieren. Dies ist besonders im Fall einer zentrischen Abtastung hilfreich, da in diesem Fall zusätzliche Komponenten für die Energieübertragung in die rotierende Welle erforderlich sind.

Diese Aufgabe wird gemäß den Merkmalen der unabhängigen Ansprüche durch ein multifunktionales Kunststoffspritzteil gelöst, das die Funktionen Kollimatorlinse, Halter für die Maßverkörperung, Spulenkörper, Halter für die LED-Platine und Zentrierung in sich vereint.

Weitere vorteilhafte Ausführungen werden in den Unteransprüchen beschrieben.

Insbesondere treten durch die erfindungsgemäße Einformung bzw. die Integration der Kunststoff-Linse in ein die Linse umfassendes Bauteil neben dem Wegfall der Notwendigkeit der Fassung der Linse deutlich geringere mechanische Spannungen innerhalb der Linse auf. Damit ist die Gefahr der Ausbildung von Spannungsriss-Korrosionen weitgehend gebannt.

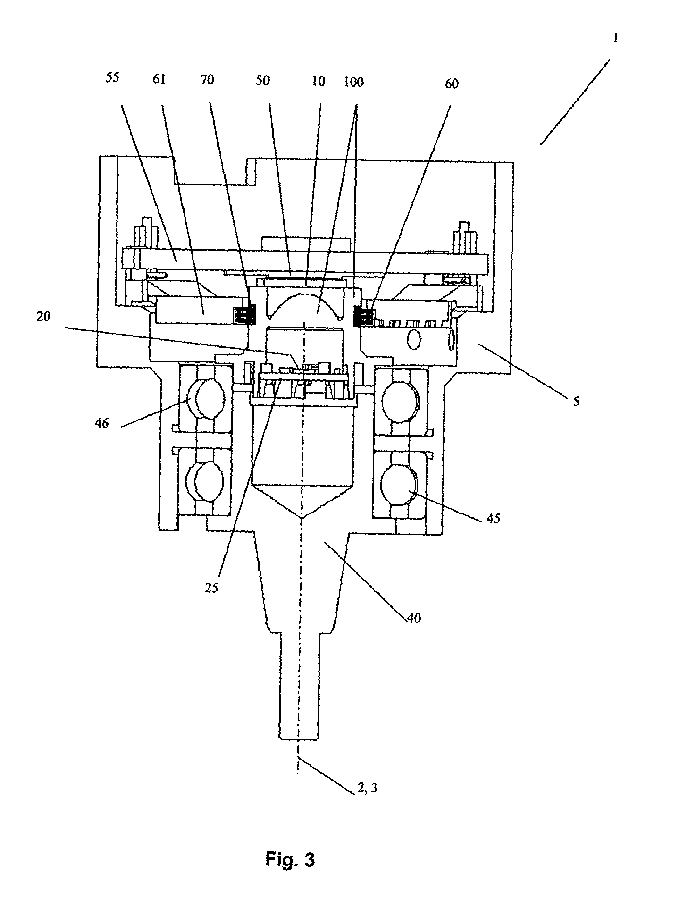

Besonders vorteilhaft gestaltet sich die Erfindung, wenn, wie etwa in der Figur 3 dargestellt, ein Winkelmessgerät in einer zentrischen Anordnung etwa gemäß der Patentschrift DE 197 50 474 C2 aufgebaut ist. Dabei sind die optische Achse 2 des Beleuchtungssystems, bestehend aus der IR-LED 20 und der Kollimatorlinse 30, und die Drehachse 3 des Winkelmessgerätes 1 idealerweise identisch. Ferner liege der Mittelpunkt der Codescheibe 10 im Drehpunkt, da ansonsten aufgrund der Exzentrizität der Codescheibe 10 Positionsabweichungen auftreten. Der Abtast-Empfänger 50 sowie die Codescheibe 10 sind ebenfalls zueinander zentrisch angeordnet, dabei liegt der Abtast-Empfänger 50 der Codescheibe 10 in geringem Abstand gegenüber.

Derzeit gefertigte Drehgeber weisen eine separate Maßverkörperung in Form einer Codescheibe auf, welche auf der Welle des Messsystems befestigt wird. In der Regel wird die Codescheibe mit der Welle verklebt. Zuvor muss die Codescheibe auf der Welle ausgerichtet werden, so dass der Mittelpunkt der Codescheibe im Drehpunkt der Welle liegt, um einen exzentrischen Lauf zu vermeiden, da dieser Messfehler verursacht.

Codescheiben gemäß dem Stand der Technik weisen in der Regel photolithographisch strukturierte Chromschichten auf Glas oder Kunststoff auf und werden auf großen Platten lithographisch gefertigt und anschließend vereinzelt. Demgegenüber weist die Verwendung von mikrostrukturierten Codescheiben aufgrund der Möglichkeit der Massenfertigung etwa mittels Mikro-Spritzguss- oder Prägeverfahren neben der preiswerteren Fertigung den Vorteil auf, direkt mit weiteren Bestandteilen des Gebers, wie etwa der Welle oder der Kollimatorlinse einteilig ausgestaltet werden zu können.

Diese photolithographisch hergestellten Schichten können durch das Integrieren genauer Zentrierungen auch direkt auf das in der Erfindung beschriebene multifunktionale Kunststoffspritzteil mit genauer Konzentrizität aufgebracht werden, sodass eine separate Justage und Montage der Codescheibe entfällt.

Demgegenüber weist die Verwendung von mikrostrukturierten Codescheiben aufgrund der Möglichkeit der Massenfertigung etwa mittels Mikro-Spritzguss- oder Prägeverfahren neben der preiswerteren Fertigung den Vorteil auf, direkt mit weiteren Bestandteilen des Gebers, wie etwa der Welle oder der Kollimatorlinse einteilig ausgestaltet werden zu können. Es sind neben der Herstellung des Replikations-Werkzeuges keine weiteren photolithographische Prozesse erforderlich. Vergleiche hierzu auch die Patentanmeldung DE 100 25 410.

Die besonderen Vorteile der Erfindung liegen in einer Kostenreduzierung, einer erhöhten Zuverlässigkeit und einer vereinfachten Montage durch die Vereinigung einer großen Anzahl verschiedener Funktionen in einem Bauteil.

Durch die Integration der Kollimatorlinse in ein größeres Bauteil lassen sich außerdem die durch den Kunststoffspritzvorgang in der Linse entstehenden mechanischen Spannungen, wie folgt beschrieben reduzieren.

Die Herstellung von Kunststoff-Linsen, sowie die Fertigung von Geräten, welche Kunststoff-Linsen beinhalten, weisen einige Probleme auf. Die Kunststoff-Linsen werden in der Regel spritzguss-technisch hergestellt.

Bisherige Kunststoff-Linsen werden mittels eines oder mehreren Anspritzpunkten aus Kunststoff gespritzt. Dadurch, dass die Anspritzpunkte direkt in die Linsenform mündeten, bildeten sich, ausgehend von diesen Anspritzpunkten aufgrund der Druckdifferenzen beim Spritzvorgang sowie auch beim Abkühlen Spannungen im Kunststoff-Material aus. Diese Material-Spannungen neigen unter ungünstigen Umgebungsbedingungen, wie etwa eine mit polaren Stoffen gesättigte Atmosphäre, Klebstoff-Auftrag oder Temperaturschwankungen zu sogenannten Spannungsriss-Korrosionen (SPRK), d.h. ausgehend von den maximalen Material-Spannungen im Kunststoff bilden sich Risse, welche sich, ausgehend von der Linsenoberfläche, in das Materialinnere des Kunststoffes fortsetzen. Ein Fassen der Linse in einem Halter durch Kleben oder Klemmen kann daher zu Rissbildung in deren Oberfläche führen.

Da die Linse 30 erfindungsgemäß in das Formteil 100 eingeformt ist, mündet der resp. die Anspritzpunkte nicht direkt in die Linsenform 30, wodurch sich nahezu keine Spannungen in der Linsenform ausbilden. Daher fällt die Neigung innerhalb der Linsenform 30 zu Spannungsriss-Korrosionen (SPRK) sehr gering aus.

Der Anspritzpunkt ist diejenige Stelle am Kunststoff-Spritzwerkzeug, durch welchen der auf oberhalb der Verglasungstemperatur erhitzte Kunststoff in die Hohlform des Werkzeuges fließt. Es ist die Nutzung von mehreren Anspritzpunkten je KunststoffTeil möglich. Das an den Anspritzpunkten verbleibende Kunststoff-Material wird anschließend nach Erkalten des Formteiles entfernt.

Durch die erfindungsgemäße Ausführung der Linse im Drehwinkelmeßsystem werden diese Probleme vermieden. Neben dem Wegfall der Notwendigkeit der Fassung der Linse treten insbesondere durch die Einformung und das Umspritzen der Kunststoff-Linse in ein weiteres funktionales Bauteil deutlich geringere mechanische Spannungen innerhalb der Linse auf. Damit ist die Gefahr der Ausbildung von Spannungsriss-Korrosionen weitgehend gebannt.

Besonders vorteilhaft ist die Erfindung, wenn zusätzlich eine diffraktive Maßverkörperung 10 zum Einsatz kommt. Diese ist mit codierten diffraktiven optischen Elementen (DOE's), etwa in Form von transmissiven Linien-Beugungsgittern gemäß der Offenlegungs-Schrift DE 100 25 410 A1 versehen, welche das Licht modulieren und somit einen inkrementalen oder absoluten Positionswert generieren. Dabei kann die Kollimator-Linse 30 oder auch eine abbildende Linse, welche den Maßstab 10 auf den Empfänger 50 abbildet, mit den DOE's des Maßstabes 10 kombiniert werden zu einem integrierten refraktivdiffraktiven mikrooptischen System.

Das gemeinsame Bauteil 1, welches die Kollimatorlinse 30 enthält, kann auch im Zwei-Komponenten Spritzgussverfahren hergestellt werden. Hierzu werden zwei Kunststoff-Materialien in einem Spritzguss-Werkzeug eingesetzt, so dass das Bauteil 100 Bestandteile aus einem ersten und weitere Bestandteile aus einem weiteren Kunststoff-Material enthält. Dadurch werden die unterschiedlichen Eigenschaften der verschiedenen Bestandteile des gemeinsamen Bauteiles 100 berücksichtigt. So sollte etwa das Kunststoff-Material der Linse 30 im emittierten Lichtbereich des Senders eine hohe Licht-Transmission aufweisen. Im Falle der Verwendung einer im infraroten Lichtspektrum emittierenden Leuchtdiode sollte der Transmissionsbereich demnach im infraroten Spektrum liegen. Die Welle hingegen sollte aus möglichst verdrehsteifem Material bestehen.

Konventionelle refraktive Linsen brechen das einfallende Licht an der Linsenoberfläche durch die Grenzschicht aus Luft und Glas und den infolgedessen erhaltenden Sprung des Brechungsindexes. Aufgrund einer wohl definierten Krümmung der Linsen-Oberfläche erhält man die gewünschte optische Eigenschaft etwa einer Sammellinse.

Anschließend wird die Erfindung anhand der Zeichnungen erläutert:
Die **Figuren 1** und **2** zeigen das multifunktionale Kunststoffspritzteil 100.
Die **Figur 3** zeigt dessen Einbau in das erfindungsgemäße Drehwinkelmessgerät 1.
Die **Figur 4** zeigt den prinzipiellen Aufbau einer Stufenlinse 30, durch welche die axiale Baulänge reduziert werden kann und
die **Figur 5** zeigt die Kombination aus Kollimatorlinse mit rückseitiger diffraktiver Maßverkörperung.

In der **Figur 6** ist schematisch deren Integration in das Multifunktionsteil dargestellt.

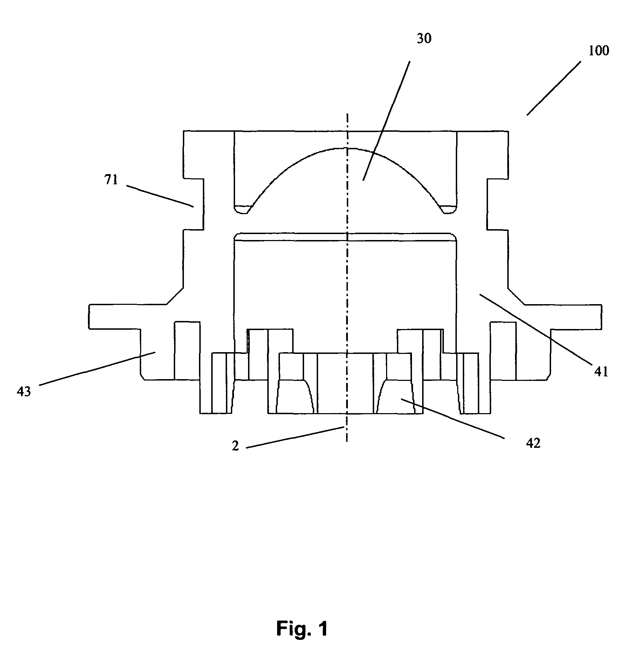

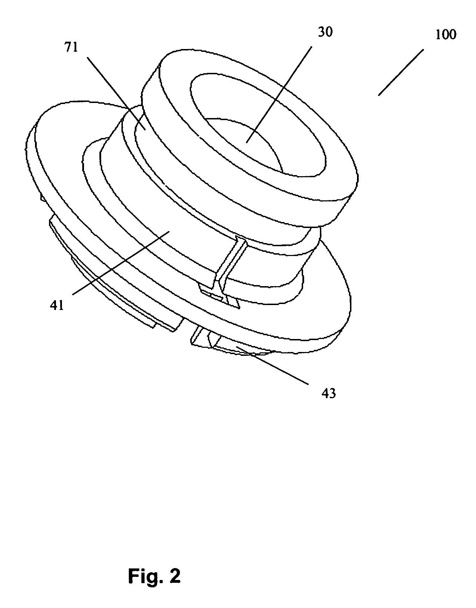

Die in der **Figur 1** und **2** dargestellte Baueinheit 100, bestehend aus der Kollimator-Linse 30 sowie einem Wellenansatz 41 weist darüber hinaus weitere Funktionseinheiten auf:
Rastnasen 42 an der Unterseite des Bauteiles nehmen die Senderplatine 25 auf, welche neben dem Licht-Sender 20 weitere elektronische Bauelemente trägt; der Licht-Sender 20 kann insbesondere als Chip-on-Board auf der Leiterplatte 25 platziert sein,
ein rotationssymmetrischer Ansatz 43 dient der Einpressung in das obere Lager 46 bzw. der Verklebung mit dem Lager 46 sowie dessen konzentrischer sowie axialer Ausrichtung,
die mit einem ebenen Rand versehene Vorderseite der Baueinheit 100 dient der Aufnahme der Codescheibe, welche die Maßverkörperung 10 trägt, welche wiederum vom IR-Sender 20 beleuchtet wird,
eine Aussparung 71 dient als Spulenkörper für die Sekundärspule 70, welche den IR-LED Licht-Sender 20 mittels induktiver Einkopplung mit elektrischer Energie versorgt.

Im Falle der Verwendung einer transmissiven Codescheibe werden abwechselnd transparente und lichtundurchlässige Flächen verwendet. In der Regel wird als Trägermaterial der Codescheibe 10 Glas oder Kunststoff genutzt. Die nichttransparenten Flächen werden in der Regel durch eine dünne Chromschicht realisiert. Im Falle von diffraktiven Maßverkörperungen etwa gemäß DE 100 25 410 A1 sind die den dunklen Flächen der Maßverkörperung 10 entsprechenden Flächen diffraktiv optisch mikrostrukturiert. Dies geschieht etwa durch Phasen-Stufen-Beugungsgitter, welche derart dimensioniert sind, dass die nullte Beugungsordnung abgeschwächt wird.

In der **Figur 1** ist ein Drehgeber in Schnittdarstellung gezeigt. Das Kunststoff-Bauteil 100 nimmt an seiner Unterseite mittels der angeformten Leiterplattenhalterung 42 die Senderplatine 25 auf, welche als Lichtsender 20 eine IR-LED als Chip on Board (COB) trägt. Darüber hinaus sind weitere elektronische Bauelemente auf der Senderplatine 25 angeordnet. Eine am Umfang des Kunststoff-Bauteiles 100 angeordnete Sekundärspule 70 versorgt den Sender 20 mit elektrischer Energie. Hierzu ist die Sekundärspule 70 als kernloser Hochfrequenz-Transformator innerhalb einer Primärspule 60 angeordnet, welche mittels eines Spulenkörpers 61 gehalten wird und feststeht. An die Primärspule 60 wird eine hochfrequente Wechselspannung angelegt.

Mittels der Zentrierung 43 wird das Kunststoff-Bauteil 100 mit dem oberen Lager 46 bzw. mit der Welle 40 verbunden.

An seiner Oberseite trägt das Kunststoff-Bauteil 100 die Maßverkörperung 10 in Form einer Codescheibe, welche dem Abtast-Empfänger 50 in geringem Abstand gegenüberliegt. Der Abtaster 50 wiederum ist auf der Empfänger-Platine 55 als COB angeordnet. Weitere elektronische Bauelemente sind mit derselben Platine in SMD-Technik verlötet.

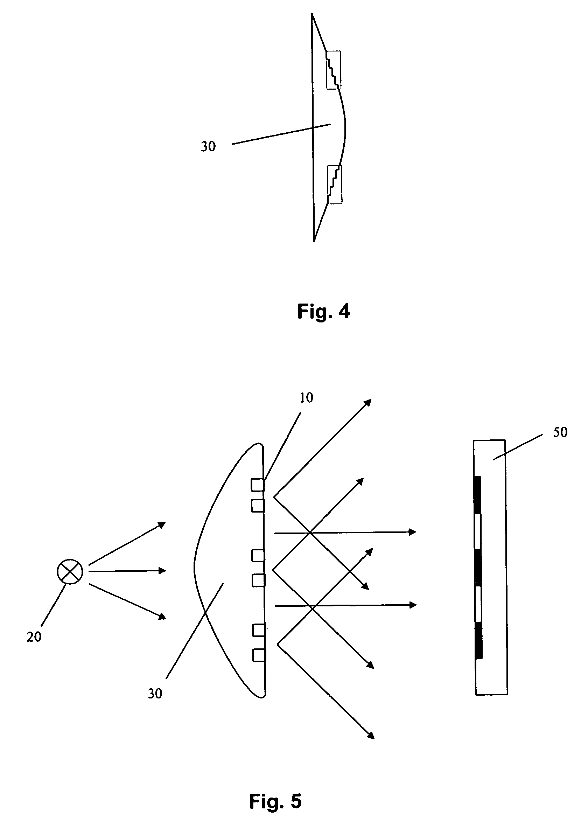

Die in der **Figur 4** dargestellte Stufenlinse, auch Fresnel-Linse genannt, wird als Sammellinse berechnet und kann anstelle einer konvexen Kollimatorlinse eingesetzt werden.

In der **Figur 5** ist schematisch ein kombiniertes optisches Element, bestehend aus einer refraktiven Linse 30 und einer diffraktiven Struktur in Form eines Phasengitters dargestellt. Die diffraktive Struktur stellt die Maßverkörperung 10 dar, indem die vom Sender 20 emittierte und durch die Linse 30 vorzugsweise parallel kollimierte Lichtwelle an verschiedenen Stellen entsprechend der Codierung mittels der diffraktiven Strukturen unterschiedlich gebeugt wird und der Empfänger 50 ein amplitudenmoduliertes Licht-Signal empfängt. Zur genauen Ausgestaltung der Empfängeroptik wird auf die Schrift DE 102 26 444 verwiesen.

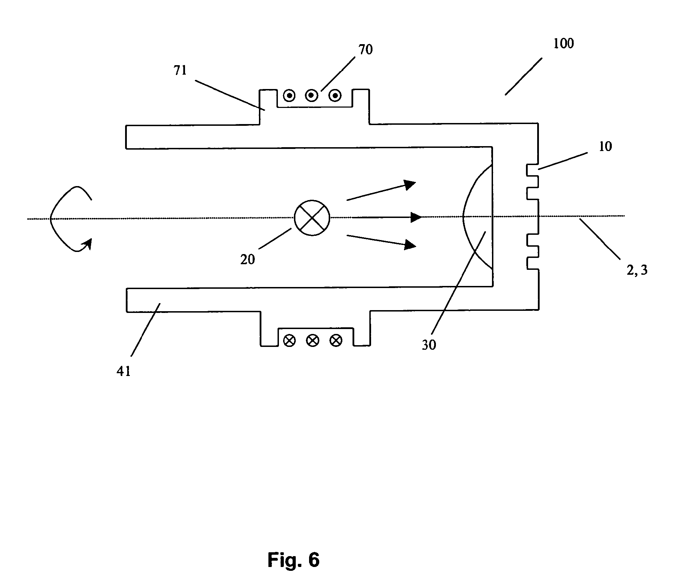

In der **Figur 6** schließlich ist schematisch dargestellt, wie das in der **Figur 5** gezeigte kombinierte optische Element, bestehend aus einer refraktiven Linse 30 und deiner diffraktiven Mikrostrukturierung, welche den Winkelcode 10 darstellt, in das einheitliche Kunststoff-Bauteil 100 integriert wird. Der Licht-Sender 20 ist im Inneren des Bauteiles 100 angeordnet und wird mittels der Sekundärspule 70, welche das Bauteil 100 am Spulenkörper 71 umwickelt, mit elektrischer Energie versorgt. Es handelt sich um eine zentrische Anordnung; die optische Achse 2 fällt mit der Drehachse 3 des Winkelmessgerätes 1 zusammen.

Das Kunststoff-Bauteil 100 besteht ferner aus einem Wellenelement 41, das als Endteil der Welle 40 des Winkelmessgerätes 1 fungiert.

Das Spritzguss-Werkzeug weist insbesondere die Negativform des abzuformenden Kunststoffteiles 100 auf. Bevorzugt wird der Schwund des Kunststoff-Bauteiles 100 nach dem Spritzguss-Vorgang bereits bei der Herstellung der Werkzeugform berücksichtigt, so dass das gefertigte Bauteil 100 und insbesondere die Kollimatorlinse 30 als optische Komponente des Bauteiles 100 die gewünschten mechanischen Abmessungen aufweist.

Besonders vorteilhaft gestaltet sich die Erfindung bei der Nutzung asphärischer Linsenoberflächen. Diese können in Glas nur mit hohem Aufwand hergestellt werden. Asphärische Linsenoberflächen erlauben jedoch nicht nur die Korrektur von Abbildungsfehlern, die bei sphärischen Linsenoberflächen namentlich bei sogenannten dicken Linsen auftreten, bei denen der Linsendurchmesser nicht wesentlich größer als die maximale Dicke der Linse ist, sondern asphärische Linsen erlauben darüber hinaus die Anpassung an den Licht-Sender 20, welcher in praxi kein idealer Punktstrahler, sondern ein Flächenstrahler ist, sowie auch eine Anpassung der Lichtintensität an die zu beleuchtende Fläche. Hierbei wird eine möglichst gleichmäßige Lichtverteilung der zu beleuchtenden Fläche bei gleichzeitig möglichst parallelem Lichtverlauf nach dem Durchgang des vom Lichtsender 20 ausgehenden Lichtes durch die Kollimator-Linse 30 angestrebt.

### Bezugszeichenliste

- 1: optoelektronisches Winkelmessgerät
- 2: optische Achse
- 3: Drehachse
- 5: Gehäuse
- 10: Maßverkörperung
- 20: Lichtquelle / Sender
- 25: Senderplatine
- 30: Kollimatorlinse
- 40, 41: Welle
- 42: Leiterplattenhalterung
- 43: Zentrierung
- 45, 46: Lagerung (Kugellager)
- 50: Abtast-Empfänger
- 55: Abtaster-Platine
- 60, 70: Spulen
- 61, 71: Spulenkörper
- 100: Kunststoff-Bauteil

### Abkürzungen

- COB: **c**hip **o**n **b**oard
- DOE: **d**iffraktives **o**ptisches **E**lement
- IR: **I**nfra-**R**ot
- LED: **l**ight **e**mitting **d**iode
- SPRK: **Sp**annungs**r**iss-**K**orrosion

## Patentansprüche

1. Optoelektronisches Winkelmessgerät (1) mit einer Maßverkörperung (10), einer Lichtquelle (20) einer Kollimatorlinse (30) und einem Abtast-Empfänger (50), wobei das von der Lichtquelle (20) ausgehende Licht durch die Kollimatorlinse (30) parallel kollimiert wird, vermittels der Maßverkörperung (10), die mit einer Messgeräte-Welle (41) verdrehfest verbunden ist, moduliert wird und vom Abtast-Empfänger (50) detektiert wird, wobei der Lichtsender (20), die Kollimatorlinse (30), die Maßverkörperung (10) und der Abtast-Empfänger (50) zentrisch angeordnet sind, so dass die Drehachse (3) im wesentlichen mit der optischen Achse (2) übereinstimmt, **dadurch gekennzeichnet, dass** sowohl zumindest das Endteil der Welle (41) als mechanische Komponente als auch die refraktive Kollimatorlinse (30) als optische Komponente des Winkelmessgerätes (1) aus einem einheitlichen Kunststoff-Bauteil (100) gebildet sind und dieses Kunststoff-Bauteil (100) den Lichtsender (20) und weitere elektronische Bauteile aufnimmt.

2. Optoelektronisches Winkelmessgerät (1) gemäß Patentanspruch 1, **dadurch gekennzeichnet, dass** weitere der im folgenden genannten Funktionsteile: der Spulenkörper (71) für die Sekundärspule (70), ein Platinenhalter (42) für die Senderplatine (25), die den Lichtsender (20) und weitere elektronische Bauteile enthält und eine Zentrierung (43) an das einheitliche Kunststoff-Bauteil (100) angeformt sind.

3. Optoelektronisches Winkelmessgerät (1) nach Patentanspruch 1, **dadurch gekennzeichnet, dass** eine diffraktive Maßverkörperung (10) abgetastet wird und dass die diffraktive Maßverkörperung (10) in das einheitliche Kunststoff-Bauteil (100) eingeformt ist.

4. Optoelektronisches Winkelmessgerät (1) nach Patentanspruch 1, **dadurch gekennzeichnet, dass** oben genanntes Kunststoff-Bauteil (100) aus einer oder mehreren Kunststoff-Komponenten spritzgusstechnisch hergestellt wird.

5. Optoelektronisches Winkelmessgerät (1) nach Patentanspruch 4, **dadurch gekennzeichnet, dass** das Spritzgusswerkzeug zentrisch zur optischen Achse (2) die Negativform der gekrümmten Oberfläche der Kollimatorlinse (30) aufweist.

6. Optoelektronisches Winkelmessgerät (5) nach Patentanspruch 1, **dadurch gekennzeichnet, dass** die Oberfläche der Linse (30) asphärisch geformt ist.

7. Optoelektronisches Winkelmessgerät (1) nach Patentanspruch 1, **dadurch gekennzeichnet, dass** die Oberfläche der Linse (30) zur Reduzierung des axialen Bauraums als Stufenlinse ausgeformt ist.

8. Optoelektronisches Winkelmessgerät (1) nach Patentanspruch 1, **dadurch gekennzeichnet, dass** das Kunststoff-Bauteil (100) für Infrarotlicht weitgehend transparent ist.

9. Optoelektronisches Winkelmessgerät (1) nach Patentanspruch 6, **dadurch gekennzeichnet, dass** der Lichtsender (20) und die Senderplatine (25) vom Kunststoff-Bauteil (100) umspritzt sind.

10. Optoelektronisches Winkelmessgerät (1) nach Patentanspruch 1, **dadurch gekennzeichnet, dass** das Kunststoff-Bauteil (100) mittels der angeformten Zentrierung (43) direkt in ein Kugellager (46) oder einen Wellenstummel (40) gefügt wird, dessen Verdrehwinkel gemessen werden soll.

11. Verfahren zur Herstellung eines optoelektronischen Winkelmessgerätes (1) mit einer Maßverkörperung (10), einer Lichtquelle (20) einer Kollimatorlinse (30) und einem Abtast-Empfänger (50), wobei das von der Lichtquelle (20) ausgehende Licht durch die Kollimatorlinse (30) parallel kollimiert wird, vermittels der Maßverkörperung (10), die mit einer Messgeräte-Welle (41) verdrehfest verbunden ist, moduliert wird und vom Abtast-Empfänger (50) detektiert wird, **dadurch gekennzeichnet, dass** sowohl zumindest das Endteil der Welle (41) als auch die refraktive Kollimatorlinse (30) aus einem einheitlichen Kunststoff-Bauteil (100) gefertigt werden, wobei der Lichtsender (20), die Empfängerspule (70) und weitere elektronische Bauteile durch dieses einheitliche Kunststoff-Bauteil (100) umspritzt werden.

12. Verfahren gemäß Patentanspruch 11, **dadurch gekennzeichnet, dass** der vorzugsweise auf einer Platine (25) angeordnete Lichtsender (30) in dem Spritzguss-Werkzeug exakt positioniert wird, woraufhin der Spritzguss-Vorgang erfolgt.

13. Verfahren gemäß Patentanspruch 11, **dadurch gekennzeichnet, dass** das Spritzguss-Werkzeug unter anderem die Negativform der gekrümmten Oberfläche der Kollimatorlinse (30) aufweist.

14. Verfahren gemäß Patentanspruch 11, **dadurch gekennzeichnet, dass** die Oberfläche der Linse (30) zur Reduzierung des axialen Bauraums als Stufenlinse ausgeformt ist.
